(19) **Europäisches Patentamt / European Patent Office / Office européen des brevets**

(11) **EP 2 269 136 B1**

(12) **EUROPEAN PATENT SPECIFICATION**

(45) Date of publication and mention of the grant of the patent:
**02.11.2016 Bulletin 2016/44**

(21) Application number: **09732753.0**

(22) Date of filing: **18.03.2009**

(51) Int Cl.:
*G06F 9/50* (2006.01)

(86) International application number:
**PCT/EP2009/053216**

(87) International publication number:
**WO 2009/127488 (22.10.2009 Gazette 2009/43)**

(54) **METHOD, SYSTEM AND COMPUTER PROGRAM FOR WORKLOAD SCHEDULING**

VERFAHREN, SYSTEM UND COMPUTERPROGRAMM ZUR KOORDINATION DER ARBEITSLAST

PROCÉDÉ, SYSTÈME ET PROGRAMME D'ORDINATEUR POUR UNE PROGRAMMATION DE CHARGES DE TRAVAIL

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **15.04.2008 EP 08154507**

(43) Date of publication of application:
**05.01.2011 Bulletin 2011/01**

(73) Proprietor: **International Business Machines Corporation**
**Armonk, NY 10504 (US)**

(72) Inventors:
 • **DELLA CORTE, Gianluca**
   **I-00144 Roma (rm) (IT)**
 • **SGRO', Antonio**
   **I-00144 Roma (rm) (IT)**
 • **GIANFAGNA, Leonida**
   **I-00144 Roma (rm) (IT)**
 • **BORGHETTI, Stefano**
   **I-00144 Roma (rm) (IT)**

(74) Representative: **Klett, Peter Michael**
   **IBM Research GmbH**
   **Zurich Research Laboratory**
   **Intellectual Property Law**
   **Säumerstrasse 4**
   **8803 Rüschlikon (CH)**

(56) References cited:

• **APPLEBY K ET AL: "Using automatically derived load thresholds to manage compute resources on-demand" INTEGRATED NETWORK MANAGEMENT, 2005. IM 2005. 2005 9TH IFIP/IEEE INTER NATIONAL SYMPOSIUM ON NICE, FRANCE 15-19 MAY 2005, PISCATAWAY, NJ, USA,IEEE, 15 May 2005 (2005-05-15), pages 747-760, XP010807111 ISBN: 978-0-7803-9087-4**
• **REZA OLFATI-SABER ET AL: "Consensus and Cooperation in Networked Multi-Agent Systems" PROCEEDINGS OF THE IEEE, IEEE. NEW YORK, US, vol. 95, no. 1, 1 January 2007 (2007-01-01), pages 215-233, XP011172479 ISSN: 0018-9219**
• **KINGSTON D B ET AL: "Discrete-Time Average-Consensus under Switching Network Topologies" AMERICAN CONTROL CONFERENCE, 2006 MINNEAPOLIS, MN, USA JUNE 14-16, 2006, PISCATAWAY, NJ, USA,IEEE, 14 June 2006 (2006-06-14), pages 3551-3556, XP010929355 ISBN: 978-1-4244-0209-0**
• **RABBAT M G ET AL: "Generalized consensus computation in networked systems with erasure links" SIGNAL PROCESSING ADVANCES IN WIRELESS COMMUNICATIONS, 2005 IEEE 6TH W ORKSHOP ON NEW YORK, NY, USA JUNE 2-8, 2005, PISCATAWAY, NJ, USA,IEEE, 2 June 2005 (2005-06-02), pages 1088-1092, XP010834672 ISBN: 978-0-7803-8867-3**
• **XIAO ET AL: "Distributed average consensus with least-mean-square deviation" JOURNAL OF PARALLEL AND DISTRIBUTED COMPUTING, ELSEVIER, AMSTERDAM, NL, vol. 67, no. 1, 2 December 2006 (2006-12-02), pages 33-46, XP005724145 ISSN: 0743-7315 cited in the application**

## Description

### Technical Field

The present invention relates to a method, system and computer program for workload scheduling in a heterogeneous distributed computing system.

### Background

Workload scheduling is an increasingly important component of an IT environment. Indeed, many grid computing environments are driven by the scheduling of work across a distributed set of resources (e.g. computation, storage, communication capacity, software licenses, special equipment etc.). In essence, scheduling is an optimization problem, which is fairly straightforward when only one resource type is involved. However, whilst further performance improvements can be achieved by including more resource variables in the scheduling process, the resulting multivariate optimization becomes a difficult mathematics problem.

Traditional approaches to job scheduling employ a master/agent architecture, wherein jobs are set up, scheduled and administered from a central server (known as a "master" server). The actual work is done by agents installed on the other servers. In use, the master maintains and interprets information relating to the jobs, available servers etc., so as to decide where to assign jobs. The agents, in turn, await commands from the master, execute the commands, and return an exit code to the master.

Whilst, the master/agent architecture allows tight control over jobs, the need for the master and agents to remain synchronised (and corresponding dependency on the availability of the network and the master) is a serious limitation of the architecture. In a related manner, the highly-centralized nature of network traffic between the master and agents can degrade the overall performance of the architecture. Another problem is the limited scalability of the master/agent architecture. In particular, a master can support only a limited number of agents and creating a new master or instance creates a new and separate administration, so that the more instances created, the more management is needed.

This problem is not solved in the article of APPLEBY K ET AL: "Using automatically derived load threshold to manage compute resources on-demand" in page 747 - page 759 of the publication of the INTEGRATED NETWORK MANAGEMENT, 2005, IM 2005. 2005 9TH IFIP/IEEE INTERNATIONAL SYMPOSIUM ON NICE, FRANCE 15-19 MAY 2005, PISCATAWAY, NJ, USA, IEEE, 15 MAY 2005 (2005-05-15) XP01807111 ISBN: 978-0-7803-9087-4. In this publication, to control computing resources, workload resource allocation thresholds are dynamically set in the computers (or virtual machines). These thresholds are adapted to the change in On-demand computing resource needs. There is no consideration of how these threshold are communicated to the computers and if a traditional master/agent architecture is used, no problem being raised with this architecture.

### Summary of the invention

According to the invention there is provided a method of scheduling a workload for a plurality of computers, the method comprising the steps of:

- establishing a network comprising at least some of the computers linked to form a connected graph;
- establishing a desired operating point for the network;
- determining the current usage of the resources of at least some of the computers in the network, by one or more jobs being executed thereon;
- calculating a predicted state value for each computer in the network from the current usage of the computers resources and the desired operating point; and
- selecting (28) another job having a predefined resource usage requirement to be executed next on one node only if the job resource requirements are closest to the difference between the node's predicted state and the node's current sate value.

The preferred embodiment
employs a modified average consensus algorithm to evenly distribute network traffic and jobs amongst a plurality of computers. To this end, the preferred embodiment allows a user to establish a virtual network comprising a logical topology of the computers. State information from each computer is propagated to the rest of the computers by the modified average consensus algorithm, thereby enabling the preferred embodiment to dispense with the need for a master server, by allowing the individual computers to themselves select jobs which optimally match a desired usage of their own resources to the resources required by the jobs.

## Brief description of the drawings

An embodiment of the invention is herein provided by way of example only, with reference to the accompanying Figures in which:

Figure 1 is a block diagram of a software architecture of a workload scheduling system of the preferred embodiment;
Figure 2 is a flow chart of a method of workload scheduling of the preferred embodiment; and
Figure 3 is a block diagram of a computer system adapted to support the method of workload scheduling of the preferred embodiment.

## Detailed description of the invention

### 1. INTRODUCTION

The preferred embodiment provides a workload scheduling system based on a consensus algorithm, for job distribution in a heterogeneous distributed computing environment. More particularly, the preferred embodiment employs this approach in an effort to avoid the need for a central (master) server of a traditional master/agent architecture. This, in turn, increases the scalability and fault-tolerance of the network and more evenly distributes traffic therein.

Fault-tolerant systems often require mechanisms for enabling independent computers or processes to arrive at a mutual agreement of some kind (or common view of the state of the system). It may be necessary, for example, for the computers of a redundant system to periodically synchronise their internal clocks. In the absence of faults, it is comparatively easy to reach a satisfactory mutual agreement. In most cases, it suffices simply to exchange values and compute some kind of average. However, when one or more of the computers is faulty, the above exchange process becomes unreliable. In particular, a faulty computer might report one value to a first computer and another value to other computers, causing each to calculate a different "average". The problem of achieving a common view in a fault-tolerant system is a major challenge of distributed computing; and is known by a number of names, including the problem of the Byzantine generals, the Byzantine agreement or the consensus problem.

Consider a network of n computers that can communicate by exchanging messages along bidirectional links. Consensus attempts to ensure that when a source computer disseminates a message, all the recipient computers receive that message unchanged. Furthermore, the message received by a recipient computer must be identical to the message issued by the source computer. However, a computer that receives a message does not know a *priori* whether or not a source computer is reliable. To overcome this problem, a protocol is required that enables the recipient computers to agree amongst themselves on the identity of the value/message received. For this, the recipient computers must exchange the values they have received. However, as the computers cannot be assumed to be completely reliable, messages/values may be exchanged that are different from those received; and several rounds of exchanges required to overcome these faults.

A. Mostefaoui, et al. Proceedings of the 8th International Colloquium on Structural Information and Communication Complexity (SIROCCO'01), 275-291, Carleton Univ. Press, 2001 describes a condition-based approach which involves identifying sets of input vectors for which it is possible to design a protocol for solving the consensus problem for n processes despite the occurrence of up to f process crashes. However, this document does not discuss the problem of workload scheduling in a heterogeneous distributed computing environment. Instead, this document describes a mechanism for reducing the number of write operations (in a shared memory) used for process communication on the same machine.

Alsalih, W., Akl, S. and Hassancin, H., Proceedings. 19th International Parallel and Distributed Processing Symposium, 2005, IPDPS 2005, 4-8 April 2005, Denver, CA, USA, p. 242a, describes a heuristic algorithm for distributing computational tasks amongst a set of mobile computing devices in a mobile wireless *ad hoc* network (MANET) to conserve energy and improve performance. However, this algorithm relates to a normal distributed scheduler and not one based on a consensus algorithm.

L. Xiao et al., Journal of Parallel and Distributed Computing, Volume 67 (1), 2007, 33-46, describes a mechanism for load-balancing using a distributed average consensus, wherein nodes set their load using a least-mean-square deviation. However, in this approach the consensus algorithm reaches a fixed average value that cannot be modified or altered by the user.

### 2. OVERVIEW OF THE PREFERRED EMBODIMENT

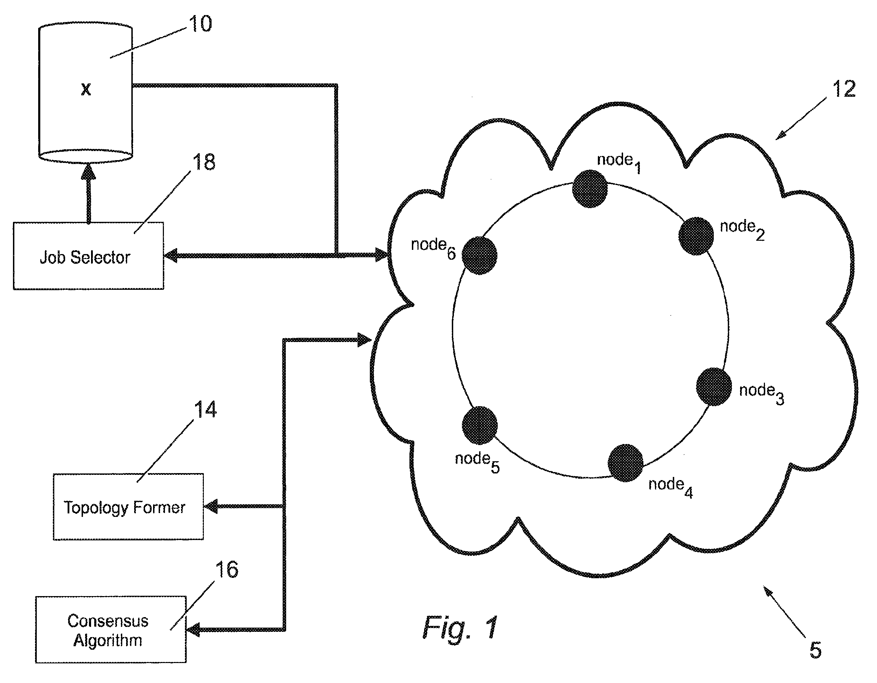

Referring to Figure 1, the preferred embodiment 5 comprises a repository 10 of jobs $(job^T \in \Re^{1xm})$ to be

performed in a distributed heterogeneous network 12. Each job ($job_i$) is accompanied by a requirement vector $\underline{req}_i \in \Re^{1xr}$, indicating the resources (e.g. CPU usage, memory, network traffic etc.) required by the job. Thus, the job repository 10 effectively contains a matrix $X \in \Re^{mx(r+1)}$ of job, requirement vector pairs $\underline{x}_i = (job_i, \underline{req}_i)$.

For simplicity, assume that the distributed network 12 comprises n nodes ($\underline{node}^T \in \Re^{1xn}$) wherein each node ($node_i$) possesses resources $\underline{res}_i \in \Re^{1xr}$. The preferred embodiment employs a topology-forming algorithm 14 together with a modified average consensus algorithm 16 to enable nodes in the distributed network 12 to advise other nodes in the network of their current status and availability to execute new jobs. The preferred embodiment further comprises a job-selection module 18, which enables the nodes ($\underline{node}^T \in \Re^{1xn}$) in the distributed network 12 to select an optimal job ($job_k$) (to execute next) from the job repository 10, in accordance with a user-defined desired usage of the resources ($\underline{res}_i \in \Re^{1xr}$) of each node ($node_i$) and the resource requirements $\underline{req}_k \in \Re^{1xr}$ of the job ($job_k$).

### 3. DETAILED DESCRIPTION OF THE SYSTEM OF THE PREFERRED EMBODIMENT

#### (a) Topology Forming Algorithm (14)

The topology forming algorithm 14 establishes a virtual network comprising a logical topology of the nodes ($\underline{node}^T \in \Re^{1xn}$) in the distributed heterogeneous network 12. Within, the virtual network, the logical topology establishes which nodes can communicate with each other. In particular, the logical topology is defined so that each node is directly connected to (and can communicate with) j neighbouring nodes (wherein j< n-1). Thus, $node_i$ is provided with a neighbourhood $N_i$, comprising j nodes ($node_p$, p=1 to j). The number of nodes to which a node is connected can be defined by the user, wherein the fault-tolerance (and convergence rate) of the preferred embodiment is improved by increasing the number of such nodes. The only condition imposed on the topology is that the graph formed by the virtual network must be connected, in other words, starting from each node it must be possible to reach any other node through an arbitrary number of steps.
Thus, in a ring topology each node has only two connections and two neighbours. So, for example, referring to Figure 1, $node_1$ is directly connected to $node_2$ and $node_6$. Similarly, $node_2$ is directly connected to $node_1$ and $node_3$; and $node_6$ is directly connected to $node_1$ and $node_5$. It will of course be realised that the topology shown in Figure 1 is provided for example purposes only and should in no way be construed as limiting the preferred embodiment to a ring topology. In particular, the skilled person will understand that the preferred embodiment is operable with any topology and number of nodes in the distributed network 12 (subject to the above-mentioned connected constraint).

#### (b) Node (Used Resources) State Variable

Each node ($node_i$) in the virtual network comprises a used resources state variable indicating the extent to which the nodes' resources are occupied by the jobs currently running thereon. This information can be acquired from real-time resource consumption metrics gathered by monitoring software. In particular, defining the $\underline{o}_i$ as the consumption metric vector associated with a given resource vector $\underline{res}_i$, the extent to which a given node's resources are occupied (by currently running jobs) can be given by a scalar variable $state_i$, which is a weighted sum of the consumption metrics of the resource variables of a node ($node_i$), i.e. $state_i = \sum_{l=1}^{r} a_{i,l} o_{i,l}$, or, in vector notation, $\underline{state} = O^T diag(\alpha)$, wherein $\underline{state} \in \Re^{nx1}$, $O \in \Re^{rxn}$ and $\alpha \in \Re^{rxr}$. The modified average consensus algorithm 16 in the preferred embodiment enables the nodes to propagate this information throughout the entire virtual network even to nodes to which the originating node is not directly connected.
A similar notation may be used to describe the requirements of a particular job (in the job repository). In particular, the net requirements ($e_q$) of a job ($job_q$) may be defined as $e_q = \sum_{l=1}^{r} \beta_{q,l} req_{q,l}$.

*(c) Modified Average Consensus Algorithm (16)*

*Con ventional Average Consensus Model*

The average consensus model of a graph provides a distributed method of calculating graph evolution with an input $u_i$ to a $node_i$ and its neighbours ($N_i$). Thus, if the evolution of the $state_i$ of $node_i$ can be denoted by $state'_i = f_i(state_i)$ + $u_i(state_i, state_p)$, $p = 1$ *to* $j$, $\in N_i \Rightarrow state'_i = u_i(state_i, state_p)$, it can be demonstrated that

$$state'_i = -\sum_{\substack{p=1 \\ to\, j,\in N_i}} (state_i - state_p) \qquad \text{(continuous solution)} \qquad \text{or}$$

$$state_i(k+1) = \frac{1}{|N_i|+1}\left(state_i(k) + \sum_{\substack{p=1 \\ to\, j,\in N_i}} state_p(k)\right) \text{(discrete solution) asymptotically solves the consensus}$$

problem into a connected graph. Accordingly, the dynamic system converges to the mean of the initial states,

$$\lim_{t\to\infty} state_i = \frac{1}{j}\sum_{p=1}^{j} state_p(0) \text{ (continuous solution) or } \lim_{k\to\infty} state_i = \frac{1}{j}\sum_{p=1}^{j} state_p(0) \text{ (discrete solution), wherein}$$

the proof for these limits is derived from the related Nyquist diagram therefor.

*Modified Average Consensus Algorithm (16)*

The preferred embodiment modifies the above-mentioned traditional average consensus algorithm by introducing a virtual node V (not shown), which is directly connected to all of the other nodes within the virtual network. Thus, the virtual node V is included within the neighbourhood $N_i$ of a $node_i$. Using this approach, each node ($node_i$) calculates its next state *($state_i(k+1)$)* from:

- its current state *($state_i(k)$)* ; and
- the current states of the other nodes (including the virtual node V) in its neighbourhood $N_i$ using the following formula

$$state_i(k+1) = \frac{1}{|N_i|+1}\left(state_i(k) + \sum_{\substack{p=1 \\ to\, j,\in N_i}} state_p(k)\right).$$

The virtual node V has a user-configurable, fixed state which represents the desired workload of all the nodes in the virtual network. The inclusion of the virtual node V into the neighbourhood of each node in the virtual network causes the average consensus algorithm with all the other nodes in the virtual network to balance against and converge to the fixed state of the virtual node V (wherein the convergence speed is related to the Laplacian of the network graph). Thus, by making the state of the virtual node V configurable by the user, the preferred embodiment effectively provides a mechanism for tuning a workload schedule to meet a desired usage of the resources of the nodes (i.e. operating point) in the virtual network (i.e. to effectively alter the operating point of the virtual network).

*(d) Job-Selection Module (18)*

The job-selection module 18 enables a node ($node_i$) to select a job (from the job repository 10) to execute next, in accordance with the node's current state and its calculated next state. In particular, if $state_i(k+1) < state_i(k)$, then no new job is to be undertaken by the node at the next iteration. However, *if $state_i(k+1) \geq state_i(k)$,* a difference variable $\Delta$ is defined as $\Delta = state_i(k+1) - state_i(k)$ (i.e. the difference between the calculated next state of $node_i$ and the current state of the node). The next job ($job_{k+1}$) selected (from the job repositary) is the job ($job_t$) whose net requirements variable ($e_t$) has minimal difference from the difference variable $\Delta$ (i.e. $e_t \,|\, \min_t ((\Delta - e_t))$).

4. DETAILED DESCRIPTION OF THE METHOD OF THE PREFERRED EMBODIMENT

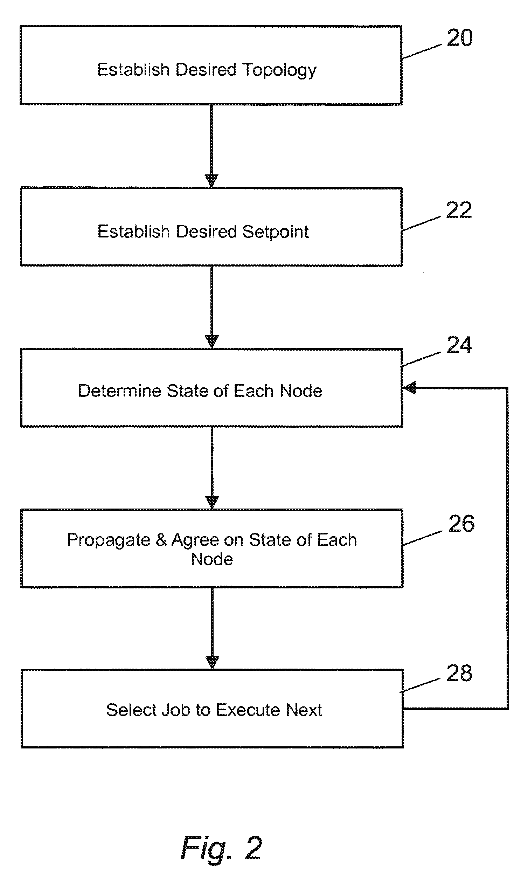

Referring to Figure 2, the method of the preferred embodiment comprises the steps of:

- establishing 20 the virtual network in accordance with a desired topology, subject to a connected graph constraint.
- establishing 22 the desired operating point of the heterogeneous distributed computing environment (i.e. the extent to which the resources of its nodes are to be occupied by jobs to be executed);

- determining 24 the current state of each node in the virtual network from the extent to which the resouces of the nodes are occupied by the jobs currently running thereon;

- calculating 26 the next state of each node in the network, from their current states together with the current states of the nodes in their neighbourhoods and the desired operating point;
- selecting 28 a job from the job repository to be executed by a given node, in accordance with the extent to which the current state of the node differs from the calculated next state of the node.

## 5. DESCRIPTION OF A GENERIC COMPUTER SYSTEM FOR THE METHOD OF THE PREFERRED EMBODIMENT

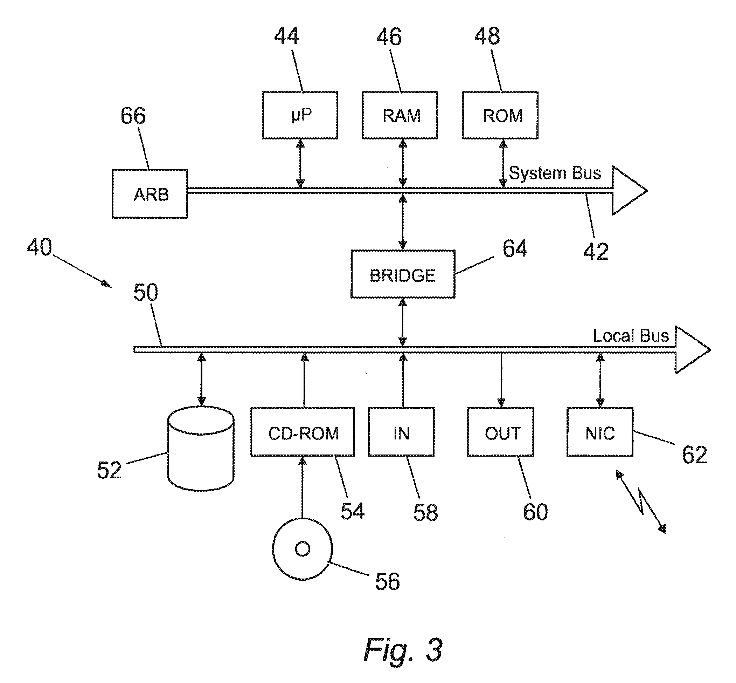

Referring to Figure 3, a generic computer system 40 adapted to support the preferred embodiments is formed by several units that are connected in parallel to a system bus 42. In detail, one or more microprocessors (XP) 44 control operation of the computer 40; a RAM 46 is directly used as a working memory by the microprocessors 44, and a ROM 48 stores basic code for a bootstrap of the computer 40. Peripheral units are clustered around a local bus 50 (by means of respective interfaces). Particularly, a mass memory consists of a hard-disk 52 and a drive 54 for reading CD-ROMs 56. Moreover, the computer 40 includes input devices 58 (for example, a keyboard and a mouse), and output devices 60 (for example, a monitor and a printer). A Network Interface Card (NIC) 62 is used to connect the computer 40 to the network. A bridge unit 64 interfaces the system bus 42 with the local bus 50. Each microprocessor 44 and the bridge unit 64 can operate as master agents requesting an access to the system bus 42 for transmitting information. An arbiter 66 manages the granting of the access with mutual exclusion to the system bus 42.

Similar considerations apply if the system has a different topology, or it is based on other networks. Alternatively, the computers have a different structure, including equivalent units, or consist of other data processing entities (such as PDAs, mobile phones and the like).

Alterations and modifications may be made to the above without departing from the scope of the invention.

## Claims

1. A method of scheduling a workload for a plurality of computers executing jobs and forming an heterogeneous network , the method comprising the steps of:

   - establishing (20) a virtual network topology in which the nodes correspond to at least some of the computers in the heterogeneous network linked so that they form the nodes of a connected graph;
   - determining (24) the current usage of the resources by one or more jobs being executed on the computers corresponding to the graph nodes, said current usage of the resources representing the current states of the nodes;
   - defining an additional virtual node directly connected to all the nodes of the connected graph, said additional virtual node having a user configured fixed state;
   - calculating (26) a predicted state value for each node in the connected graph by using an average consensus algorithm applied to the corresponding graph converging against a state depending on the virtual node fixed state; and,
   - selecting (28) another job having a predefined resource usage requirement to be executed next on one node only if the job resource requirements are closest to the difference between the node's predicted state and the node's current state value.

2. The method as claimed in claim 1 wherein the step of determining (24) the current usage of the resources of at least some of the computers in the network comprises the step of acquiring information relating to the current usage of the resources from resource consumption metrics gathered by monitoring software.

3. The method as claimed in claim 1 or claim 2 wherein:

   the method is preceded by the step of allowing a user to select a topology for the network; and
   the step of establishing (20) the network comprises a step of linking the computers in accordance with the selected topology.

4. The method as claimed in any of the preceding claims wherein the step of calculating (26) a predicted state value for each computer in the network comprises the steps of:

   - allowing a user to select a neighborhood value;
   - for each node, $node_i$, in the graph, forming a neighborhood group of nodes $N_i$, comprising the neighborhood

value number of nodes directly connected to said each node$_i$ in the graph, each neighborhood group of nodes including said added virtual node; and

- the predicted state value for each node$_i$ being a function of the current state value for node$_i$ and the current state value for each node of the group of nodes.

**5.** The method as claimed in claim 4 in which the predicted state value for each node node$_i$ in the graph is calculated as:

$$state_i(k+1) = \frac{1}{|N_i|+1}\left(state_i(k) + \sum_{p=1\ to\ j,\in N_i} state_p(k)\right)$$

wherein *state*$_i$(k) is the current state value for node$_i$ and *state*$_p$(k) is the current state value for each node of node$_i$ group of nodes.

**6.** System for scheduling a workload for a plurality of computers, wherein the system comprises a one or more components adapted to perform the method of any one of the preceding claims.

**7.** A computer program comprising instructions for carrying out the method of any claim 1 to 5 when said computer program is executed on a computer system.

**8.** A computer program product stored in a medium readable by a computer machine, the computer program product tangibly embodying a computer program according to claim 7.

**Patentansprüche**

**1.** Verfahren zum Koordinieren einer Arbeitslast für eine Vielzahl von Computern, die Aufträge ausführen und ein heterogenes Netzwerk bilden, wobei das Verfahren die Schritte umfasst:

Einrichten (20) einer virtuellen Netzwerk-Topologie, in der die Knoten wenigstens einigen der Computer in dem heterogenen Netzwerk entsprechen, die so vernetzt sind, dass sie die Knoten eines verbundenen Graphen bilden;
Ermitteln (24) der momentanen Betriebsmittelverwendung durch einen oder mehrere Aufträge, die auf den Computern ausgeführt werden, die den Graphenknoten entsprechen, wobei die momentane Betriebsmittelverwendung die momentanen Knotenzustände wiedergibt;
Festlegen eines weiteren virtuellen Knotens, der direkt mit allen Knoten des verbundenen Graphen zusammengeschaltet ist, wobei der weitere virtuelle Knoten einen festen, nutzerkonfigurierten Zustand aufweist;
Berechnen (26) eines vorhergesagten Zustandswerts für jeden Knoten in dem verbundenen Graphen durch Verwenden eines mittleren Konsensalgorithmus, der auf den jeweiligen Graphen angewendet wird und gegen einen Zustand konvergiert, der von dem festen Zustand des virtuellen Knotens abhängt; und
Auswählen (28) eines anderen Auftrags mit einer vorgegebenen Anforderung an die Betriebsmittelverwendung, der nur dann als Nächstes auf einem Knoten auszuführen ist, wenn die Betriebsmittel-Anforderungen des Auftrags der Differenz aus dem vorhergesagten Knotenzustand und dem momentanen Zustandswert am nahesten sind.

**2.** Verfahren nach Anspruch 1 , wobei der Schritt des Ermittelns (24) der momentanen Betriebsmittelverwendung von wenigstens einigen der Computer in dem Netzwerk den Schritt des Erfassens von Daten umfasst, die sich auf die momentane Betriebsmittelverwendung aus der Verbrauchs-Messgröße an Betriebsmitteln bezieht, der von einer Überwachungs-Software angelegt wird.

**3.** Verfahren nach Anspruch 1 oder 2, wobei:

dem Verfahren der Schritt des Erlaubens eines Nutzers zum Auswählen einer Topologie für das Netzwerk vorausgeht; und
der Schritt des Einrichtens (20) des Netzwerks einen Schritt des Verbindens der Computer gemäß der ausgewählten Topologie umfasst.

**4.** Verfahren wie nach einem der vorhergehenden Ansprüche, wobei der Schritt des Berechnens (26) eines vorhergesagten Zustandswerts für jeden Computer in dem Netzwerk die Schritte umfasst:

Erlaubnis erteilen an einen Nutzer einen Nachbarwert auszuwählen;
für jeden Knoten i in dem Graph Bilden einer Nachbargruppe von Koten Ni, die die Anzahl der Knotennachbarn umfasst, die direkt mit dem jeweiligen Knoten i in dem Graph verbunden sind, wobei jede Nachbargruppe von Knoten den hinzugefügten virtuellen Knoten beinhaltet; und
wobei es sich bei dem vorhergesagten Zustandswert für jeden Knoten i um eine Funktion des momentanen Zustandswerts für den Knoten i und des momentanen Zustandswerts für jeden Knoten aus der Knotengruppe handelt.

5. Verfahren nach Anspruch 4, wobei der vorhergesagte Zustandswert für jeden Knoten i in dem Graph berechnet wird als:

$$state_i(k+1) = \frac{1}{|N_i|+1}\left(state_i(k) + \sum_{\substack{p=1 \\ to\ j, \in\ N_i}} state_p(k)\right)$$

wobei es sich bei $state_i(k)$ um den momentanen Zustandswert für den Knoten i und bei $state_p(k)$ um den momentanen Zustandswert für jeden Knoten der Knotengruppe zum Knoten i handelt.

6. System zum Koordinieren einer Arbeitslast für eine Vielzahl von Computern, wobei das System eine oder mehrere Komponenten umfasst, die zum Ausführen des Verfahrens nach einem der vorhergehenden Ansprüche ausgelegt sind.

7. Computerprogramm, das Anweisungen zum Ausführen des Verfahrens nach einem der Ansprüche 1 bis 5 umfasst, wenn das Computerprogramm auf einem Computersystem ausgeführt wird.

8. Computer-Programmprodukt, das in einem computerlesbaren Medium gespeichert ist, wobei in dem Computer-Programmprodukt physisch ein Computerprogramm nach Anspruch 7 enthalten ist.


**Revendications**

1. Procédé de programmation d'une charge de travail pour une pluralité d'ordinateurs exécutant des tâches et formant un réseau hétérogène, le procédé comprenant les étapes consistant à :

- établir (20) une topologie de réseau virtuel dans laquelle les noeuds correspondant à au moins certains des ordinateurs dans le réseau hétérogène reliés de sorte qu'ils forment les noeuds d'un graphe connecté ;
- déterminer (24) l'utilisation actuelle des ressources par une ou des tâches étant exécutées sur les ordinateurs correspondants aux noeuds de graphe, ladite utilisation actuelle des ressources représentant les états actuels des noeuds ;
- définir un noeud virtuel additionnel connecté directement à tous les noeuds du graphe connecté, ledit noeud virtuel additionnel ayant un état fixe configuré par utilisateur ;
- calculer (26) une valeur d'état prédit pour chaque noeud dans le graphe connecté en utilisant un algorithme de consensus moyen appliqué au graphe correspondant convergeant contre un état dépendant de l'état fixe de noeud virtuel ; et
- sélectionner (28) une autre tâche ayant une exigence d'utilisation de ressource prédéfinie à exécuter ensuite sur un noeud seulement si les exigences de ressource de tâche sont plus proches de la différence entre la valeur d'état prédit du noeud et la valeur d'état actuel du noeud.

2. Procédé selon la revendication 1, dans lequel l'étape de détermination (24) de l'utilisation actuelle des ressources d'au moins certains des ordinateurs dans le réseau comprend l'étape d'acquisition d'informations relatives à l'utilisation actuelle des ressources d'après les métriques de consommation de ressources collectées par un logiciel de surveillance.

3. Procédé selon la revendication 1 ou 2, dans lequel :

le procédé est précédé par l'étape d'autorisation d'un utilisateur à sélectionner une topologie pour le réseau ; et l'étape d'établissement (20) du réseau comprend une étape de liaison des ordinateurs conformément à la topologie sélectionnée.

4. Procédé selon l'une quelconque des revendications précédentes, dans lequel l'étape de calcul (26) d'une valeur d'état prédit pour chaque ordinateur dans le réseau comprend les étapes consistant à :

- autoriser un utilisateur à sélectionner une valeur de voisinage ;
- pour chaque noeud, noeudi, dans le graphe, former un groupe de voisinage de noeuds Ni, comprenant le numéro de valeur de voisinage des noeuds directement connectés à chaque dit noeud, dans le graphe, chaque groupe de voisinage de noeuds incluant ledit noeud virtuel ajouté ; et
- la valeur d'état prédite pour chaque noeud$_i$ étant une fonction de valeur d'état actuelle pour le noeud$_i$ et la valeur d'état actuelle pour chaque noeud du groupe de noeuds.

5. Procédé selon la revendication 4, dans lequel la valeur d'état prédit pour chaque noeudi dans le graphe est calculée comme :

$$\acute{e}tat_i(k+1) = \frac{1}{|N_i|+1}\left(\acute{e}tat_i(k) + \sum_{p=1 \; to \; j,\in N_i} \acute{e}tat_p(k)\right)$$

dans lequel state$_i$(k) est la valeur d'état actuel pour le noeud$_i$ et state$_p$(k) est la valeur d'état actuel pour chaque noeud$_i$ du groupe de noeuds.

6. Système de programmation d'une charge de travail pour une pluralité d'ordinateurs, dans lequel le système comprend un ou plusieurs composants adaptés pour mettre en oeuvre le procédé selon l'une quelconque des revendications précédentes.

7. Programme informatique comprenant des instructions pour mettre en oeuvre le procédé selon l'une quelconque des revendications 1 à 5 quand ledit programme informatique est exécuté sur un système informatique.

8. Produit de programme informatique mémorisé dans un support lisible par une machine informatique, le produit de programme informatique constituant un mode de réalisation tangible d'un programme informatique selon la revendication 7.

*Fig. 1*

Fig. 2

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Using automatically derived load threshold to manage compute resources on-demand. **APPLEBY K et al.** INTEGRATED NETWORK MANAGEMENT, 2005, IM 2005. 2005 9TH IFIP/IEEE INTERNATIONAL SYMPOSIUM ON NICE, FRANCE. IEEE, 15 May 2005, 747, , 759

- **A. MOSTEFAOUI et al.** Proceedings of the 8th International Colloquium on Structural Information and Communication Complexity (SIROCCO'01). Carleton Univ. Press, 2001, 275-291
- **ALSALIH, W. ; AKL, S. ; HASSANCIN, H.** *Proceedings. 19th International Parallel and Distributed Processing Symposium,* 04 April 2005, 242a
- **L. XIAO et al.** *Journal of Parallel and Distributed Computing,* 2007, vol. 67 (1), 33-46